# EUROPEAN PATENT APPLICATION

(11) **EP 2 243 616 A1**
(43) Date of publication of application: **27.10.2010**
(21) Application number: 09707644.2
(22) Date of filing: 05.02.2009
(51) Int. Cl.: B29C 47/12, B29C 47/06, B29C 49/22, B29L 9/00

(54) **DIE HEAD FOR FORMING MULTILAYERED RESIN AND EXTRUDER HAVING THE SAME**

(30) Priority: 07.02.2008 JP 2008027623
(71) Applicant: Toyo Seikan Kaisha, Ltd., Tokyo 100-8522 (JP)
(72) Inventor: SAKAGUCHI, Toshiki, Yokohama-shi Kanagawa 230-0001 (JP)
(74) Representative: Müller-Boré & Partner Patentanwälte
(86) International application number: PCT/JP2009/051939
(87) International publication number: WO 2009/099129

(57) **Abstract**

A die head is provided with a plunger and a measuring chamber, and the molten resin is uniformly fed to the die head of an extrusion-forming machine. That is, the die head comprises a main layer-forming flow passage for flowing a molten resin into an ejection port of the die head of the extrusion-forming machine passing through the die head, and a core layer-forming flow passage for intermittently flowing a molten resin into the ejection port of the die head passing through the die head. The main layer-forming flow passage and the core layer-forming flow passage are provided with measuring chambers into which the molten resins are pressure-introduced from the upstream sides of the flow passages due to the pressure-feeding forces of the molten resins, and the measuring chambers are provided with plungers which move back due to the pressure-feeding forces of the molten resins and eject the measured molten resins to the downstream side of the flow passage, and the amounts of ejecting the molten resins by said plungers and the ejection timings are controlled by control units that control the plungers.

## Description

### Technical Field:

This invention relates to a die head for forming a multi-layer resin by covering the surrounding of a core layer of a molten resin flowing out from a core layer-forming flow passage with a main layer flowing out from a main layer-forming flow passage, and an extrusion-forming machine having the same.

### Background Art:

As is widely known among people skilled in the art, a composite molten resin material comprising an outer molten resin layer (main layer) and at least an inner molten resin layer (core layer) wrapped in the outer molten resin layer is quite often used as a synthetic resin material for forming a preformed article (usually called preform) that is to be formed (usually, blow-formed) into a container for beverages or for forming a container lid or a cup by cutting a molten resin extruded from an extrusion-forming machine into a drop (mass) followed by compression-forming. As the outer molten resin, a synthetic resin having excellent mechanical properties and sanitary properties is, usually, selected. As the inner molten resin layer, recycled material is selected for reusing the resources, or a functional synthetic resin is selected which is excellent concerning either or both the oxygen-absorbing property and gas-barrier property.

By using an extrusion-forming machine having a plurality of die heads, on the other hand, the molten resin for forming the main layer flows through an outer molten resin flow passage, the molten resin for forming the core layer flows through an inner molten resin flow passage, and the molten resins are, thereafter, ejected from ejection ports of the die heads. When the extrusion-forming machine is provided with the plurality of die heads as described above, it is desired that the molten resins are uniformly distributed and fed to the die heads and are ejected to maintain uniformity in the forming or in the formed articles. A further improved uniformity is required when the molten resins comprise a plurality of kinds of layers or masses, or when a composite molten resin of a mixture thereof is used.
To maintain uniformity, the molten resin must be fed in an equal amount to the die heads. If the plurality of die heads are the same ones, the uniformity can be maintained by setting equal the length of branched flow passages from the ejection ports of the extrusion-forming machine to the die heads. In practice, however, even if the distance is set to be equal from the ejection ports to the die heads, it is difficult to equally distribute and feed the molten resin to the die heads so as to be equally ejected due to dispersed machining precision of the flow passages and die heads and due to dispersion in the temperature. Besides, the lengths of the flow passages cannot often be set to be equal.
To cope with this, a patent document 1 discloses a forming machine for forming a composite resin material in which a plunger and a measuring chamber are arranged in the die head to suitably eject a molten resin from an ejection port. A patent document 2 discloses an injection-forming machine by using a servo mechanism for a plunger.
Patent document 1: JP-A-7-68631
Patent document 2: JP-A-6-79771

### Disclosure of the Invention:

### Problems to be Solved by the Invention:

According to the above patent document 1 and patent document 2, however, the composite molten resin is so formed that the surface of fault thereof extends in the direction of discharge (axial direction), which is not to form a composite resin material in which one of the molten resin is a core layer of the form of a dumpling and the whole surface of the core layer is wrapped with a main layer as contemplated by this application.
According to the technology disclosed by the patent document 1, further, the molten resin is fed, via a rotary mechanism, to an accumulator (measuring chamber) arranged in a die head and, therefore, the structure of the die head becomes complex. According to the technology disclosed by the patent document 2, the molten resin is once fed to a resin passage (measuring chamber) and is injected by using a ring plunger. If the plunger operation control of this technology is employed, however, the air is trapped by the molten resin or vacuum bubbles generate therein due to a negative pressure (with respect to the atmospheric pressure) in the measuring chamber caused by the plunger that moves back at the time of feeding the molten resin into the measuring chamber. When there are provided a plurality of die heads, therefore, the extrusion-forming cannot be uniformly effected maintaining good quality.

The present invention was accomplished in view of the above circumstances and has an object of providing a die head for forming a multi-layer resin, which is equipped with a plunger and a measuring chamber, and is capable of suitably ejecting a required amount of a molten resin from the die head of an extrusion-forming machine, and an extrusion-forming machine having the same.

### Means for Solving the Problems:

In order to solve the above problems, the present invention is concerned with a die head for forming a multi-layer resin comprising at least a main layer-forming flow passage for flowing a molten resin into a nozzle of the die head of an extrusion-forming machine passing through the die head, and a core layer-forming flow passage for intermittently flowing a molten resin into the nozzle of the die head passing through the die head, so that the surrounding of a core layer flowing out from the core layer-forming flow passage is covered with a main layer flowing out from the main layer-forming flow passage, wherein at least either the main layer-forming flow passage or the core layer-forming flow passage is provided with a measuring chamber into which the molten resin is pressure-introduced from the upstream side of the flow passage due to the pressure-feeding force of the molten resin, the measuring chamber is provided with a plunger which measures the molten resin while moving back receiving the pressure-feeding force of the molten resin and moves forward so as to eject the measured molten resin to the downstream side of the flow passage, and at least the amount of ejecting the molten resin measured by the plunger and the timing for starting the ejection are controlled by a control unit that controls the back-and-forth motion of the plunger.
In the die head for forming a multi-layer resin, the plunger is driven by a servo motor, the servo motor is controlled by the control unit at a moment when the molten resin is pressure-fed into the measuring chamber, the plunger moves back in a state where the plunger is receiving a backward-moving pressure of the molten resin that is pressure-introduced into the measuring chamber, and a position to where the plunger moves back is limited.
In the die head for forming a multi-layer resin, it is desired that the measuring chamber and the plunger are incorporated in the die head.
In the die head for forming a multi-layer resin, one or more molten resin flow passages are provided on the outer side of the core layer-forming flow passage, and at least any one of the flow passages, the main layer-forming flow passage or the core layer-forming flow passage is provided with the measuring chamber and the plunger.
The die head for forming a multi-layer resin is provided with an inner moving block, and the inner moving block works both as an opening/closing valve of the main layer-forming flow passage and as the core layer measuring chamber.
The inner moving block, further, works as an opening/closing valve of the core layer-forming flow passage, and switches the opening and closing of the main layer flow passage and the core layer flow passage.
The plunger can work as a flow passage opening/closing valve to the measuring chamber in the main layer flow passage and/or the core layer flow passage.
The die head for forming a multi-layer resin can be used for an extrusion-forming machine equipped with a plurality of the die heads for forming the multi-layer resin that have the measuring chamber and the plunger.
A multi-layer drop-forming machine is realized by additionally providing the die head for forming a multi-layer resin with a cutter which periodically cuts the multi-layer resin ejected from the ejection port into a multi-layer drop, by periodically moving the plunger back and forth, and by bringing the period for moving the plunger back and forth into agreement with the period for cutting the multi-layer resin by the cutter.
The operation of the plunger can be brought into synchronism with the operation of the cutter.

### Effect of the Invention:

By using the control unit, the die head for forming the multi-layer resin of the invention controls the measurement and the amount of ejecting the molten resin based on the back-and-forth movement of the plunger, measures the timing for forward movement (start of ejection of the molten resin), ejects the core layer molten resin or ejects the main layer molten resin to form a preferred composite molten resin. At the time of measuring the molten resin, further, the plunger is moved back while applying a pressure of the pressure-feeding force of molten resin to the plunger, so that the molten resin is contained in the measuring chamber effectively preventing the air or vacuum bubbles from being trapped by the measured molten resin, and correctly measures the molten resin in the measuring chamber without gap and ejects it.
More desirably, the plunger is more correctly driven and controlled by a servo motor to more preferably effect the measurement.
With the plunger being incorporated in the die head, the measurement and ejection can be effected near the ejection port decreasing loss and dispersion caused by loss of pressure in the pipe and more effectively preventing the trapping of air and vacuum bubbles.
By providing one or more molten resin passages on the outer side of the core layer-forming flow passage, it is made possible to form a multi-layer resin having the core layer arranged near the center of the ejection port. Here, when the plunger is provided on the core layer side, the correctly measured core layer molten resin can be extruded maintaining good accuracy of weight preventing the trapping of air and vacuum bubbles. When the plunger is provided on the other layer side, further, a cleaning shot can be effected for pushing out the core layer by utilizing the resin extruded from the plunger.
Upon providing the inner moving block in the die head for forming the multi-layer resin, the inner moving block working as the opening/closing valve of the main layer-forming flow passage and as the core layer measuring chamber, it is allowed to construct the die head in a simple structure in a small size.
With the inner moving block working as the opening/closing valve of the core layer-forming flow passage and switching the opening and closing of the main layer flow passage and the core layer flow passage, the die head can be more simply constructed in a small size.
With the plunger working as a flow passage opening/closing valve to the measuring chamber in the main layer flow passage and/or the core layer flow passage, the die head can be simply constructed in a small size.
When the extrusion-forming machine is provided with a plurality of the die heads of the invention, a preferred composite molten resin can be nearly uniformly ejected from the die heads by suitably controlling the molten resin pressure-feeding force from the upstream of the flow passage or by suitably controlling the mechanism/device (e.g., servo motor) that moves the plunger up and down.
Upon bringing the period of back-and-forth movement of the plunger of the die head for forming the multi-layer resin into agreement with the cutting period of the cutter, a forming machine is realized which is capable of successively obtaining the multi-layer resin drops in a predetermined amount in a state where the core layer resin is arranged at a predetermined position.
Upon bringing the operation of the plunger into synchronism with the operation of the cutter, the position of the core layer in the multi-layer drop does not deviate in successively forming the multi-layer resin drops.

### Brief Description of the Drawings:

[Fig. 1] is a plan view schematically illustrating a forming system 1 for executing the compression-forming by using an extrusion-forming machine according to a first embodiment of the invention (same as a second embodiment except an increased number of die heads and flow passages).
[Fig. 2] is a plan view illustrating a portion of the compression-forming portion of the forming system of Fig. 1 on an enlarged scale.
[Fig. 3] is a sectional view illustrating a die head of the extrusion-forming machine of Fig. 1 on an enlarged scale.
[Fig. 4] is a view for illustrating the operation of the die head of Fig. 3, wherein A is a sectional view of the initial position, B is a sectional view in a state of measuring the molten resins of the main layer and the core layer, and C is a sectional view in a state where a flow passage (opening/closing valve) of the core layer molten resin is opened.
[Fig. 5] is a view (continued from Fig. 4) for illustrating the operation of the die head of Fig. 3, wherein A is a sectional view in a state where the molten resin in a core layer measuring chamber is extruded, B is a sectional view in a state where a flow passage (opening/closing valve) of the core layer molten resin is closed, and C is a sectional view in a state where the molten resin of the main layer is extruded.
[Fig. 6] is a sectional view of the die head of the extrusion-forming machine according to a second embodiment of the invention on an enlarged scale.
[Fig. 7] is a view illustrating the operation of the die head of Fig. 6, wherein A is a sectional view of the initial position, B is a sectional view in a state of measuring the molten resin of the main layer and extruding the molten resin of the core layer, and C is a sectional view in a state where the flow passages of the core layer molten resin and the main layer molten resin are changed over (core layer molten resin flow passage is closed, main layer molten resin flow passage is opened).
[Fig. 8] is a view (continued from Fig. 7) for illustrating the operation of the die head of Fig. 6, wherein A is a sectional view in a state of extruding the main layer and measuring the molten resin of the core layer, and B is a sectional view in a state where the flow passages of the core layer molten resin and the main layer molten resin are changed over (core layer molten resin flow passage is opened, main layer molten resin flow passage is closed).
[Fig. 9] is a plan view schematically illustrating the extrusion-forming machine equipped with a plurality of die heads according to a modified embodiment of the invention. Description of Reference Numerals:

2 extrusion-forming machine
7 die head
20 ejection port
31, 55 outer blocks
32 inner block
31c, 55c discharge holes
33 lift valve
34, 58 main layer measuring chambers
35, 41, 59, 65 annular plungers
36, 42, 60, 66, 80 lift mechanisms/devices (servo motors)
37, 61 main layer flow passages
39, 63 core layer measuring chambers
43, 67 core layer flow passages
56 inner moving block
57 shaft-like valve
W opening/closing valve
X first opening/closing valve
Y second opening/closing valve
Z third opening/closing valve

### Best Mode for Carrying Out the Invention:

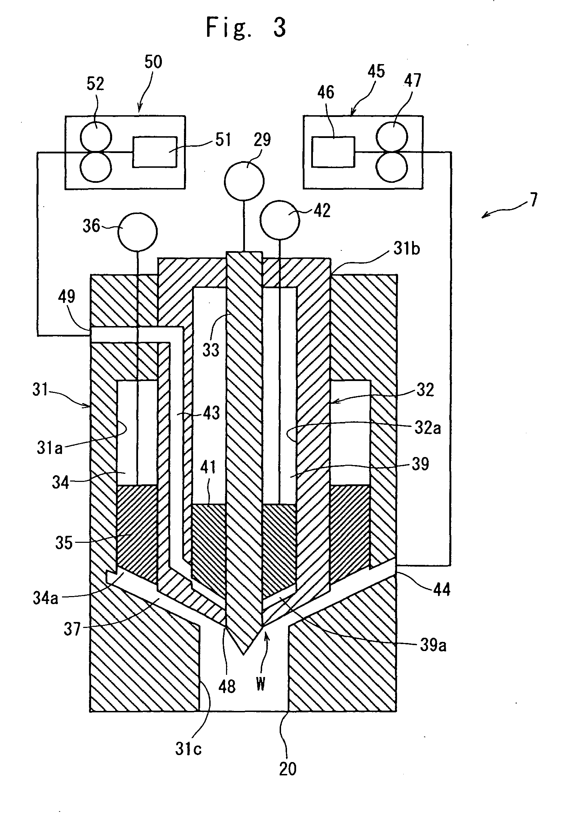

A die head for forming a multi-layer resin according to a first embodiment of the invention and an extrusion-forming machine having the same will now be described with reference to the drawings.

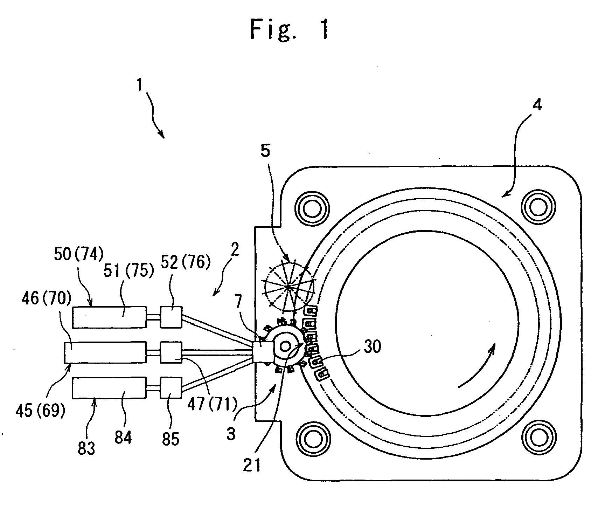

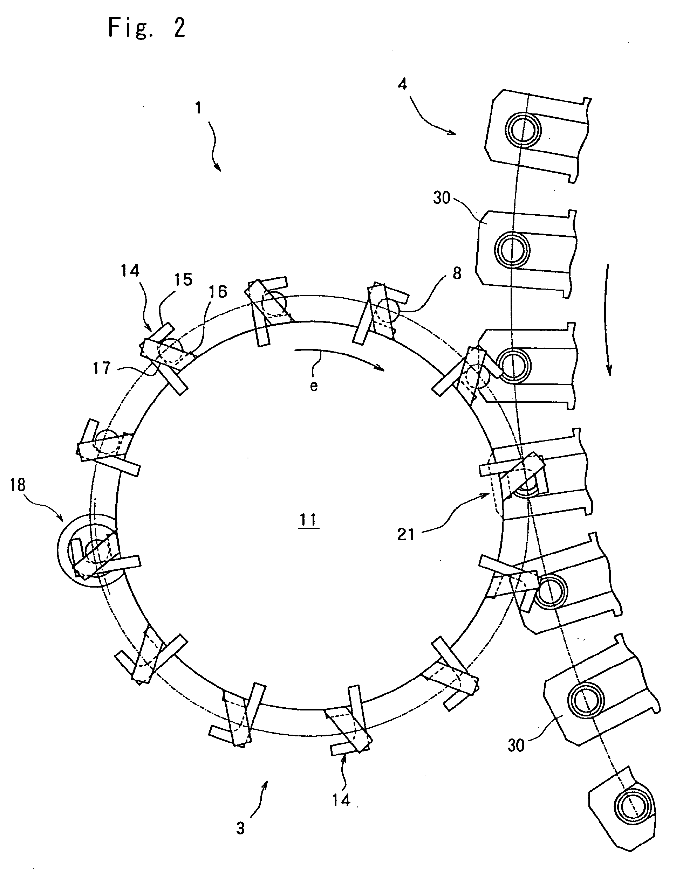

Fig. 1 is a plan view schematically illustrating a forming system 1 for executing the compression-forming by using an extrusion-forming machine having a die head for forming a multi-layer resin of the invention, and Fig. 2 is a plan view illustrating a portion of the compression-forming portion of the forming system of Fig. 1 on an enlarged scale.
The forming system 1 includes an extrusion-forming machine 2 according to the invention, a synthetic resin conveyer device 3, a compression-forming device 4, and a discharge device 5.
The extrusion-forming machine 2 is equipped with a plurality of molten resin feed means 45, 50 and 83, i.e., main layer molten resin feed means 45, core layer molten resin feed means 50 and outer main layer molten resin feed means 83 (here, the molten resin feed means 83 may be omitted in this embodiment, but is used in a second embodiment described later) that use different molten resins as starting materials. The molten resin feed means 45, 50 and 83 form molten resin by heating, melting and kneading synthetic resin materials such as PP and PET as well as a functional synthetic resin material. The extrusion-forming machine 2 has, on the front end side thereof, a die head 7 to which the molten resins are fed from the molten resin feed means 45, 50 and 83. The die head 7 has resin flow passages formed therein extending up to an ejection port 20 (see Fig. 3) formed in the lower surface at a front end portion thereof. That is, the molten resin feed means 45, 50 and 83 send the molten resins to the die head 7; i.e., the molten resins sent from the molten resin feed means 45, 50 and 83 are extruded from the ejection port 20 as a composite molten resin that will be described later.

If described with reference to Fig. 1 and Fig. 2, the synthetic resin conveyer device 3 includes a rotary disk 11 that rotates in a direction indicated by an arrow e. A plurality of cutting/holding units 14 are arranged on the circumferential edge of the rotary disk 11 maintaining an equal distance in the circumferential direction. Accompanying the rotation of the rotary disk 11, the cutting/holding units 14 are conveyed through a circular conveyer passage that extends along the circumferential edge of the rotary disk 11, and are conveyed through a receiving zone 18 positioned just under the ejection port 20 of the die head 7 and facing thereto and through a resin feed zone 21 positioned over the compression-forming device 4 and facing a predetermined portion thereof. The cutting/holding unit 14 cuts the composite molten resin ejected from the die head 7 into a mass of the composite molten resin (multi-layer drop) 8 which is, then, fed to a metal mold 30 of the compression-forming device 4. The metal mold 30 compression-forms the multi-layer drop 8 into a preform, a container or the like, which is, thereafter, handed over to the discharge device 5 so as to be conveyed to the next step.

Fig. 3 is a sectional view illustrating the die head 7 of the extrusion-forming machine 2 (for easy comprehension of the structure of the die head 7 and its operation, depth lines are omitted).
The die head 7 has an outer periphery of a circular shape in horizontal cross section, and includes an outer block 31 arranged on the outer circumferential side, the outer block 31 being nearly of an annular shape forming a large-diameter hole 31a at an intermediate position thereof in the up-and-down direction, forming an intermediate-diameter hole 31b on the upper side of the large-diameter hole 31a, i.e., on the upper side of the outer block 31, and forming a nozzle 31c on the lower side of the large-diameter hole 31a, i.e., on the lower side of the outer block 31. The lower side of the large-diameter hole 31a is formed in the shape of an inverse circular truncated cone.
An inner block 32 is arranged in the intermediate-diameter hole 31b and in the large-diameter hole 31a. In the inner block 32, a cylindrical inner hole 32a is formed having the same diameter. The lower portion of the inner hole 32a is formed in the shape of an inverse conical truncated cone.
In the center of the inner hole 32a, a shaft-like lift valve 33 is arranged with its axis being oriented in the up-and-down direction.

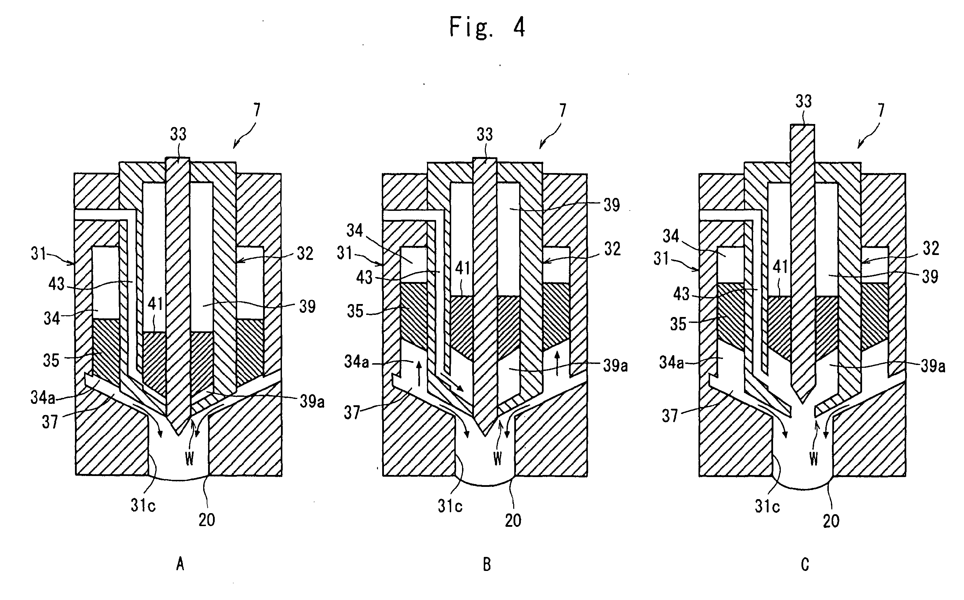

Being positioned in the large-diameter hole 31a, a main layer measuring chamber 34 (see also Fig. 4B) is formed in an annular region between the outer block 31 and the inner block 32, and a main layer flow passage 37 is formed on the lower side of the main layer measuring chamber 34. The downstream side of the main layer flow passage 37 [when a certain portion from the molten resin feed device (e.g., main layer molten resin feed means 45 or core layer molten resin feed device 50 in this embodiment) to the ejection port 20 of the die head 7 is seen, the molten resin feed device side is hereinafter called upstream side, and the ejection port side is called downstream side] is communicated with the nozzle 31c at all times and is, further, communicated with the ejection port 20 of the die head 7 on the downstream side thereof.
In the main layer measuring chamber 34, an annular plunger 35 is arranged to move back and forth in the up-and-down direction in the main layer measuring chamber 34, i.e., being connected to a device/mechanism that is capable of moving up and down. As the device/mechanism for moving the plunger 35 up and down, there can be exemplified an air cylinder, a hydraulic cylinder, a mechanical cam, a crank mechanism and a link mechanism, which may, further, be linked to a known mechanism/device such as a spring or a dumper. In this embodiment, a servo motor 36 is linked to the annular plunger 35 enabling the annular plunger 35 to move up and down in the main layer measuring chamber 34 in the up-and-down direction. Upon moving the annular plunger 35 up and down, a main layer measuring portion 34a formed under the annular plunger 35 in the main layer measuring chamber 34 undergoes the expansion and contraction in the up-and-down direction to increase and decrease the volume. The servo motor 36 is connected to control means that is not shown and is electrically controlled.

Being positioned in the inner hole 32a of the inner block 32, a core layer measuring chamber 39 (see also Fig. 4B) is formed in an annular region between the inner block 32 and the lift valve 33, and a core layer flow passage 43 is formed on the lower side of the core layer measuring chamber 39. A valve hole 48 is provided on the downstream side of the core layer flow passage 43. The valve hole 48, together with the lift valve 33, opens and closes the core layer flow passage 43. At the descended position shown in Fig. 3, the opening/closing valve W (lift valve 33 and valve hole 48 together are referred to as opening/closing valve W) assumes the closed state, and assumes the opened state if the lift valve 33 moves up. With the opening/closing valve W in the opened state, the core layer flow passage 43 is communicated with the nozzle 31c and is, further, communicated with the ejection port 20 of the die head 7 on the downstream side thereof. The lift valve 33 is electrically controlled by control means that is not shown.
In the core layer measuring chamber 39, an annular plunger 41 is arranged to move back and forth in the up-and-down direction in the core layer measuring chamber 39, i.e., being connected to a device/mechanism that is capable of moving up and down. In this embodiment, a servo motor 42 is linked to the annular plunger 41 like the annular plunger 35, and the annular plunger 41 is allowed to move up and down in the core layer measuring chamber 39 in the up-and-down direction. Upon moving the annular plunger 41 up and down, a core layer measuring portion 39a formed under the annular plunger 41 in the core layer measuring chamber 39 undergoes the expansion and contraction in the up-and-down direction to increase and decrease the volume. The servo motor 42 is connected to control means that is not shown and is electrically controlled.

A main layer feed port 44 on the upstream side of the main layer flow passage 37 arranged on the outer side of the die head 7 is connected to main layer molten resin feed means 45. The molten resin feed means 45 includes an extruder 46 and a gear pump 47 connected to the downstream side thereof. The main layer molten resin in the molten state extruded from the extruder 46 is fed to the main layer flow passage 37 through the gear pump 47.
A core layer feed port 49 on the upstream side of the core layer flow passage 43 arranged on the inner side of the die head 7 is connected to core layer molten resin feed means 50. The molten resin feed means 50 includes an extruder 51 and a gear pump 52 connected to the downstream side thereof. The core layer molten resin in the molten state extruded from the extruder 51 is fed to the core layer flow passage 43 through the gear pump 52.

Next, described below is the operation of the extrusion-forming machine according to the first embodiment of the present invention.
Owing to the above-mentioned constitution, the extrusion-forming machine 2 shown in Fig. 1 heats, melts and kneads the synthetic resin materials such as polyethylene terephthalate and the like, and conveys the multi-layer drop (molten resin) 8 to the die head 7.
In the initial state as shown in Fig. 3 and Fig. 4A, the lift valve 33 is arranged at the descended position to place the opening/closing valve W in the closed state. Therefore, the core layer flow passage 43 is not communicated with the ejection port 20. Further, the annular plunger 35 in the main layer measuring chamber 34 and the annular plunger 41 in the core layer measuring chamber 39 are arranged at the descended positions, respectively. The annular plungers 35 and 41 are imparted with upward pushing forces (loads) due to the flow of the molten resins being controlled by the servo motors 36 and 42 to which they are connected. Upon receiving the pushing forces, the annular plungers 35 and 41 ascend to set their positions or to set their ascending speeds relative to the measuring chamber 39. Here, the main layer molten resin is pressure-fed from the main layer molten resin feed means 45 to the main layer feed port 44, and is nearly continuously pressure-fed to the nozzle 31c on the downstream side passing through the main layer flow passage 37.

Thus, the main layer molten resin is nearly continuously pressure-fed from the main layer molten resin feed means 45 and the core layer molten resin is continuously pressure-fed from the core layer molten resin feed means 50. In the main layer flow passage 37, the front end (lower end) portion of the annular plunger 35 is arranged at the descended position where it faces the main layer flow passage 37, and the pressure-feeding force of the molten resin exerts a force on the front end portion of the annular plunger 35 so as to push it up. As described above, the annular plunger 35 is operated by the servo motor 36 and is resisting against the pushing force of the main layer molten resin. Here, the servo motor 36 gradually lifts the annular plunger 35 while it is receiving the pushing force up to a predetermined height in the main layer measuring chamber 34 as shown in Fig. 4B so that the main layer molten resin is contained in the main layer measuring portion 34a and is measured. Due to this action, the main layer molten resin is contained in the main layer measuring portion 34a and desirably fills the main layer measuring portion 34a without gap in a state of receiving a pressure and, desirably, a predetermined pressure.
Due to the pressure-feeding force of the main layer molten resin as described above, part of the main layer molten resin fills the main layer measuring portion 34a; i.e., the molten resin is contained in the main layer measuring portion 34a so that it is filled with the main layer molten resin of a predetermined amount while the remaining molten resin nearly continuously flows into the nozzle 31c on the downstream side.

Near the valve hole 48 (see Fig. 3) of the core layer flow passage 43, on the other hand, the front end portion of the annular plunger 41 is arranged at the descended position where it faces the core layer flow passage 43. In this state, the opening/closing valve W comprising the lift valve 33 and the valve hole 48 is closed and, therefore, the core layer flow passage 43 is closed, whereby a force acts on the annular plunger 41 to push it up due to the pressure-feeding force of the core layer molten resin. The annular plunger 41 is operated by the servo motor 42 and is resisting against the pushing force of the core layer molten resin. Here, the servo motor 42 gradually lifts the annular plunger 41 while it is receiving the pushing force up to a predetermined height in the core layer measuring chamber 39 as shown in Fig. 4B so that the core layer molten resin is contained in the core layer measuring portion 39a and is measured. Due to this action, the core layer molten resin is contained in the core layer measuring portion 39a and desirably fills the core layer measuring portion 39a without gap in a state of receiving a predetermined pressure; i.e. , the core layer molten resin of a predetermined amount is filled therein (measured).

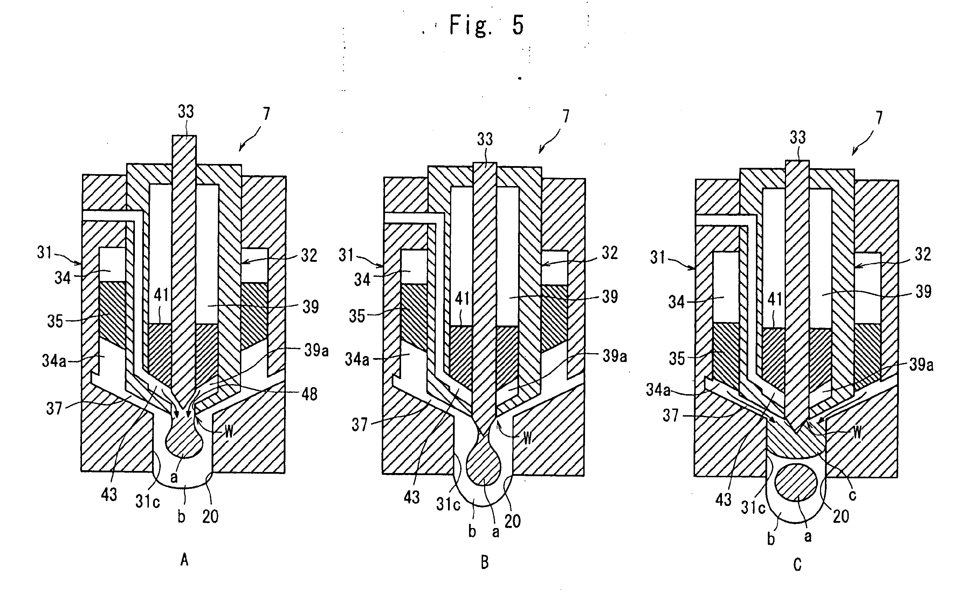

After the core layer molten resin of the predetermined amount is filled in the core layer measuring chamber 39, the lift valve 33 is lifted up as shown in Fig. 4C to open the opening/closing valve W so that the core layer flow passage 43 is communicated with the nozzle 31c. Next, as shown in Fig. 5A, the servo motor 42 is operated by a control unit that is not shown to descend the annular plunger 41 on the core side to extrude the core layer molten resin in the core layer measuring portion 39a into the nozzle 31c through the valve hole 48. The main layer molten resin has already been pressure-fed into the nozzle 31c, and the core layer molten resin is ejected as a dumpling into the main layer molten resin layer b (a sign b is attached to the main layer molten resin that has flown into the nozzle 31c) in the nozzle 31c.

Referring to Fig. 5B, after the core layer molten resin a (a sign a is attached to the core layer molten resin of the shape of a dumpling ejected into the nozzle 31c) is ejected, the lift valve 33 is descended down to the valve hole 48 while maintaining the annular plunger 41 on the core side at the descended position to thereby close the opening/closing valve W.
Referring, next, to Fig. 5C, the annular plunger 35 on the main layer side is descended by the control device to eject the molten resin in the main layer measuring portion 34a into the nozzle 31c (hereinafter called cleaning shot, and a sign c is attached to the molten resin ejected by the cleaning shot). The molten resin c ejected by the cleaning shot plays the role of flowing away the core layer molten resin adhered to the front end of the lift valve 33 with the main layer resin.
Due to the above cleaning shot and the flow of the main layer molten resin from the main layer flow passage 37 to the nozzle 31c when the state of Fig. 4A is resumed, the core layer molten resin a ejected like a dumpling is wrapped at its upper portion, too, with the main layer molten resin b to form a composite molten resin.
Thus, the core layer molten resin a is wrapped in the main layer molten resin b, and the composite molten resin flowing through the nozzle 31c is discharged from the ejection port 20 of the die head 7, and is cut at a desired position into a multi-layer molten resin mass (multi-layer drop) (usually, the composite molten resin is so cut that the core layer molten resin a is arranged nearly in the center of the drop).

If described from forming the multi-layer drop through to forming a preform by way of the forming system 1 of Figs. 1 and 2, the composite molten resin including the core layer extruded from the ejection port 20 of the die head 7 is cut between the core layers by the cutter 17 shown in Fig. 2, and is separated away from the ejection port 20 to form a multi-layer drop 8. When the multi-layer drop 8 is formed from the composite molten resin and is cut away from the ejection port 20, the first and second holding members 15 and 16 are closed to hold the multi-layer drop 8. The multi-layer drop 8 held by the cutting/holding unit 14 of the closed state is moved to a position over a metal mold (female mold) 30 of the compression-forming device 4. The composite molten resin is fed to the metal mold 30, and a preform is formed by compression-forming. The preform is cooled and is, thereafter, handed over to the discharge device 5 (see Fig. 1).

According to this embodiment as described above, the servo motors 36 and 42 are driven by the control devices that are not shown to control the positions of the annular plungers 35 and 41 or their ascending/descending speeds, to measure the ascending/descending timing, to eject the core layer molten resin, and to clean-shoot the main layer molten resin to thereby form a desirable composite molten resin. In measuring the molten resin, the annular plungers 35 and 41 ascend being controlled by their corresponding servo motors 36 and 42 while receiving loads against the pressure-feeding forces of the molten resins so that the molten resins are contained in the measuring portions 34a and 39a, effectively preventing the air from being trapped in the measured molten resins or preventing the formation of vacuum bubbles, correctly measuring the amounts of molten resins in the measuring portions 34a and 39a, and ejecting them. In particular, the core layer molten resin a is ejected by the measured amount (does not drip down from the main layer resin passage like the main layer molten resin b) and is ejected in a correct amount compounded by the valve opening/closing operation by the lift valve 33. Therefore, even if the core layer molten resin feed means 50 is not provided with the gear pump 52, the core layer molten resin a can be ejected in a correct amount owing to the controlled ascending/descending motion of the annular plunger 41 and the lift valve 33.
The rates of feeding the molten resins of the main layer molten resin feed means 45 and of the core layer molten resin feed means 50 are set constant so that the masses (multi-layer drops of the multi-layer molten resin are successively obtained in constant amounts and in a state where the core layer resin is arranged nearly at the predetermined position. Further, the annular plungers 35, 41 and the lift valve 33 are reciprocally moved at a constant period and, besides, the frequency the cutter 17 passes over the ejection port 20 (period of cutting the composite molten resin by the cutter 17) is set constant. Desirably, further, the period of reciprocal operation of the annular plungers 35, 41 and the lift valve 33 is brought into agreement with the period of cutting the composite molten resin by the cutter 17. Here, it is desired to maintain synchronism so that the motions of the annular plunger 35, annular plunger 41, lift valve 33 and cutter 17 will not gradually undergo deviation. For instance, based on a moment the cutter 17 has passed over the ejection port 20, the operation timings of the annular plunger 35, annular plunger 41 and lift valve 33 are maintained, i.e., the ejection start timings of the annular plunger 35, annular plunger 41 and lift valve 33 may be so instructed as to be deviated by desired periods from the above moment that is based upon in order to obtain a desired multi-layer drop. Or, based on a given operation timing of the annular plunger 35, annular plunger 41 or lift valve 33, the operation timings of the other plunger and cutter 17 may be instructed. Or, the annular plungers 35, 41, lift valve 33 and cutter 17 may be electrically controlled so as to be successively operated being linked to each other, or their drive systems may be mechanically linked together.

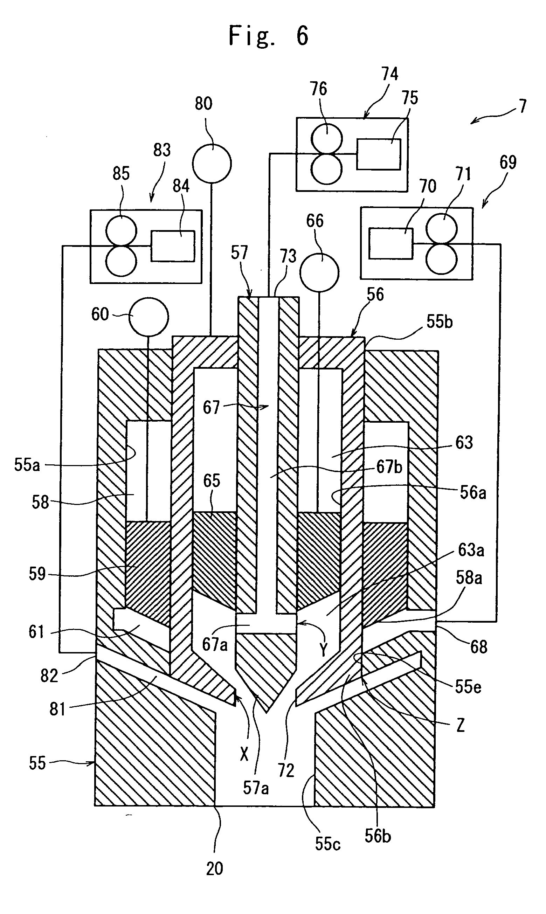

Next, described below is the die head for forming the multi-layer resin according to a second embodiment of the invention and the extrusion-forming machine having the same.
In the above first embodiment, a two-kind-three-layer composite molten resin was formed through the die head by using the main layer and the core layer of molten resins of different kinds. Now, this embodiment forms a two-kind-three-layer or a three-kind-three layer composite molten resin.
Referring to Fig. 6, the die head 7 has an outer periphery of a circular shape in transverse cross section, and includes an outer block 55 arranged on the outer circumferential side. The outer block 55 has nearly an annular shape forming a large-diameter hole 55a at an intermediate position thereof in the up-and-down direction, forming an intermediate-diameter hole 55b on the upper side of the large-diameter hole 55a, i.e., on the upper side of the outer block 55, and forming a nozzle 55c on the lower side of the large-diameter hole 55a, i.e., on the lower side of the outer block 55. The lower side of the large-diameter hole 55a is formed in the shape of an inverse circular truncated cone.
An inner moving block 56 is arranged in the intermediate-diameter hole 55b and in the large-diameter hole 55a. In the inner moving block 56, a cylindrical inner hole 56a is formed having the same diameter on the upper side thereof. The lower portion of the inner hole 56a is formed in the shape of an inverse conical truncated cone.
In the center of the inner hole 56a, a shaft-like valve 57 is arranged in the up-and-down direction. The shaft-like valve 57 is forming a valve body 57a at its front end portion, and is provided with a core layer flow passage 67 that forms a transverse flow passage 67a in the upper part of the valve body and extending radially or in one or in two directions, and a longitudinal flow passage 67b in the center in the axial direction thereof on the upper side of the valve body 57a.

Being positioned in the large-diameter hole 55a, a main layer measuring chamber 58 is formed in an annular region between the outer block 55 and the inner moving block 56, and a main layer flow passage 61 is formed on the lower side of the main layer measuring chamber 58. In the main layer measuring chamber 58, an annular plunger 59 is arranged to move back and forth in the up-and-down direction in the main layer measuring chamber 58, i.e., being connected to a device/mechanism that is capable of moving up and down. A servo motor 60 is linked to the annular plunger 59 enabling the main layer measuring chamber 58 to move up and down. Upon moving the annular plunger 59 up and down, a main layer measuring portion 58a formed under the annular plunger 59 in the main layer measuring chamber 58 undergoes the expansion and contraction in the up-and-down direction to increase and decrease the volume. The servo motor 60 is connected to control means that is not shown and is electrically controlled.

The inner moving block 56 can be ascended and descended by a lift mechanism, preferably, by a servo motor 80, forms a valve body 56b at the lower end portion thereof, closes a valve hole 55e formed on the downstream side of the main layer flow passage 61 in the outer block 55, and forms an opening/closing valve Z relying upon the valve hole 55e and the valve body 56b (valve hole 55e and valve body 56b are generally referred to as third opening/closing valve Z) to open and close the main layer flow passage 61. In a state where the third opening/closing valve Z is opened, the main layer flow passage 61 is communicated with the nozzle 55c on the downstream side at all times and is communicated with the ejection port 20 of the die head 7 which is further on the downstream side.
Being positioned in the inner hole 56a of the inner moving block 56, a core layer measuring chamber 63 is formed in an annular region between the inner moving block 56 and the shaft-like valve 57, and a valve hole 72 is formed on the lower side of the core layer measuring chamber 63. The valve hole 72, together with the valve body 57a of the shaft-like valve 57, opens and closes the core layer flow passage 67. In a state shown in Fig. 6, the opening/closing valve X (valve body 57a and valve hole 72 together are referred to as first opening/closing valve X) assumes the opened state. The shaft-like valve 57 may be rendered to move up and down to open and close the first opening/closing valve X. In this embodiment, however, the inner moving block 56 moves up and down to open and close the first opening/closing valve X. Therefore, the shaft-like valve 57 does not move up and down.
In the core layer measuring chamber 63, an annular plunger 65 is arranged to move back and forth in the up-and-down direction in the core layer measuring chamber 63, i.e., being connected to a device/mechanism that is capable of moving up and down. As the device/mechanism for moving the plunger 65 up and down, there can be exemplified an air cylinder or a hydraulic cylinder. In this embodiment, a servo motor 66 is linked to the annular plunger 65 enabling the core layer measuring chamber 63 to be ascended and descended in the up-and-down direction. Upon moving the annular plunger 65 up and down, the core layer measuring portion 63a formed under the annular plunger 65 in the core layer measuring chamber 63 undergoes the expansion and contraction in the up-and-down direction to increase and decrease the volume. The servo motor 66 is connected to control means that is not shown and is electrically controlled.

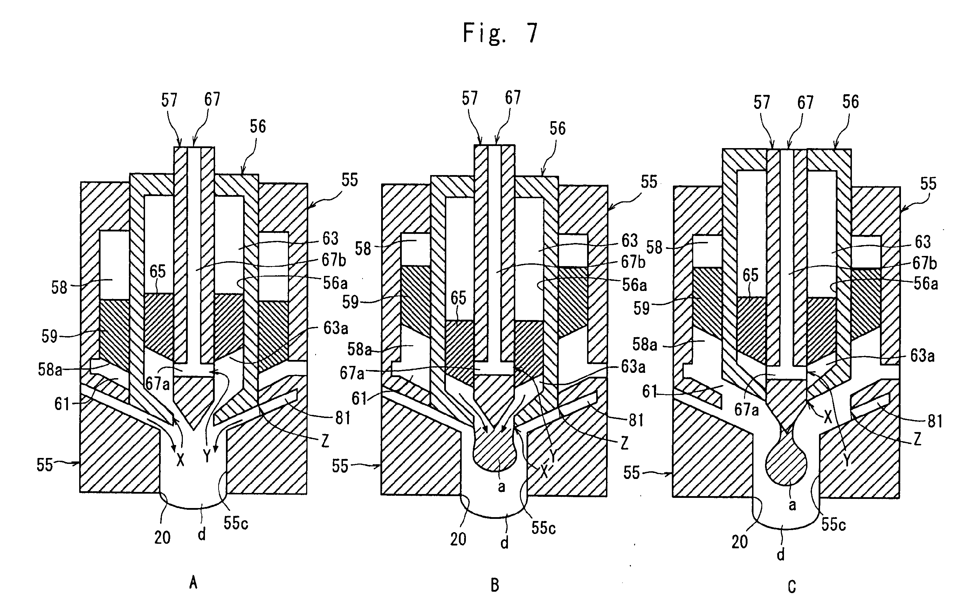

In a state where the annular plunger 65 is lowered, the inner circumferential surface of the annular plunger 65 closes the transverse flow passage 67a formed in the shaft-like valve 57, and closes the core layer flow passage 67 (see Fig. 7B). Therefore, the core layer flow passage 67 is forming the opening/closing valves at portions in a number of the transverse flow passages 67a formed substantially radially or in one or two directions or, for example, in Fig. 6, at the right and left two places (the opening/closing valve formed by the annular plunger 65 and the transverse flow passage 67a is referred to as second opening/closing valve Y). Upon opening the first opening/closing valve X and the second opening/closing valve Y, the core layer flow passage 67 is communicated with the nozzle 55c and is, further communicated with the ejection port 20 of the die head 7 on the downstream side.
An outer main layer flow passage 81 is formed under the main layer flow passage 61 of the die head 7. The outer main layer flow passage 81 is communicated with the nozzle 55c at all times and is, further, communicated with the ejection port 20 of the die head on the downstream side.

A main layer feed port 68 on the upstream side of the main layer flow passage 61 arranged on the outer side of the die head 7 is connected to main layer molten resin feed means 69. The molten resin feed means 69 includes an extruder 70 and a gear pump 71 connected to the downstream side thereof. The main layer molten resin in the molten state extruded from the extruder 70 is fed to the main layer flow passage 61 through the gear pump 71.
A core layer feed port 73 on the upstream side of the core layer flow passage 67 arranged on the inner side of the die head 7 is connected to core layer molten resin feed means 74. The molten resin feed means 74 includes an extruder 75 and a gear pump 76 connected to the downstream side thereof. The core layer molten resin in the molten state extruded from the extruder 75 is fed to the core layer flow passage 67 through the gear pump 76.
A main layer feed port 82 on the upstream side of the outer main layer flow passage 81 arranged on the lower side of the die head 7 is connected to outer main layer molten resin feed means 83. The molten resin feed means 83 includes an extruder 84 and a gear pump 85 connected to the downstream side thereof. The main layer molten resin in the molten state extruded from the extruder 84 is fed to the outer main layer flow passage 81 through the gear pump 85.

Next, described below is the operation of the extrusion-forming machine according to the second embodiment of the present invention.
In the initial state as shown in Fig. 6 and Fig. 7A, the inner moving block 56 is arranged at the descended position to open the first opening/closing valve X. The annular plunger 65 on the core side is arranged at the ascended position in a state of having measured the amount of the core layer molten resin in advance or through the above step of ejection through steps of Fig. 7C to Fig. 8A that will be described below, and the second opening/closing valve Y is in the opened state. Therefore, the core layer flow passage 67 is communicated with the ejection port 20. Thereafter, the inner moving block 56 is arranged at the descended position to close the third opening/closing valve Z, and the annular plunger 59 in the main layer measuring chamber 58 is arranged at the descended position. In this embodiment, the molten resins of the same kind are pressure-fed from the main layer molten resin feed means 69 and from the outer main layer molten resin feed means 83, and the molten resin of a different kind is pressure-fed from the core layer molten resin feed means 74.

In this state, the outer main layer molten resin is pressure-fed from the outer main layer molten resin feed means 83 to the main layer feed port 82, and is nearly continuously pressure-fed to flow into the nozzle 55c and the ejection port 20 passing through the outer main layer flow passage 81. Further, the main layer molten resin is nearly continuously pressure-fed from the main layer molten resin feed means 69 to the main layer feed port 68. Similarly the core layer molten resin is nearly continuously (or intermittently in case the core layer flow passage 67 is completely closed by the second opening/closing valve Y) pressure-fed from the core layer molten resin feed means 74 to the core layer feed port 73.
In the main layer flow passage 61, the front end portion of the annular plunger 59 is arranged at the descended position where it faces the main layer flow passage 61, and the pressure-feeding force of the molten resin exerts a force on the annular plunger 59 so as to push it up. The annular plunger 59 is operated by the servo motor 60 and is resisting against the pushing force of the molten resin. Here, the servo motor 60 gradually lifts up the annular plunger 59 while it is receiving the pushing force up to a predetermined height in the main layer measuring chamber 58 as shown in Fig. 7B so that the main layer molten resin is contained in the main layer measuring portion 58a and is measured. Due to this action, the main layer molten resin is contained in the main layer measuring portion 58a and desirably fills the main layer measuring portion 58a without gap in a state of receiving a predetermined pressure.
Due to the pressure-feeding force of the main layer molten resin as described above, the main layer molten resin fills the main layer measuring portion 58a; i.e., the molten resin is contained in the main layer measuring portion 58a so that it is filled with the main layer molten resin of a predetermined amount.

Near the transverse flow passage 67a of the core layer flow passage 67, on the other hand, the annular plunger 65 on the core layer side is lowered as shown in Fig. 7B to extrude the core layer molten resin filled in the core layer measuring portion 63a in the preceding step into the nozzle 55c. The outer main layer molten resin (hereinafter, a sign d is attached to the outer main layer molten resin that flows into the nozzle 55c) has already been pressure-fed into the nozzle 55c, and the core layer molten resin a is ejected as a dumpling into the outer main layer molten resin layer d in the nozzle 55c. At this moment, the annular plunger 65 closes the transverse passage 67a of the shaft-like valve 57 to thereby close the second opening/closing valve Y, and interrupts the core layer molten resin from flowing into the core layer measuring portion 63a.

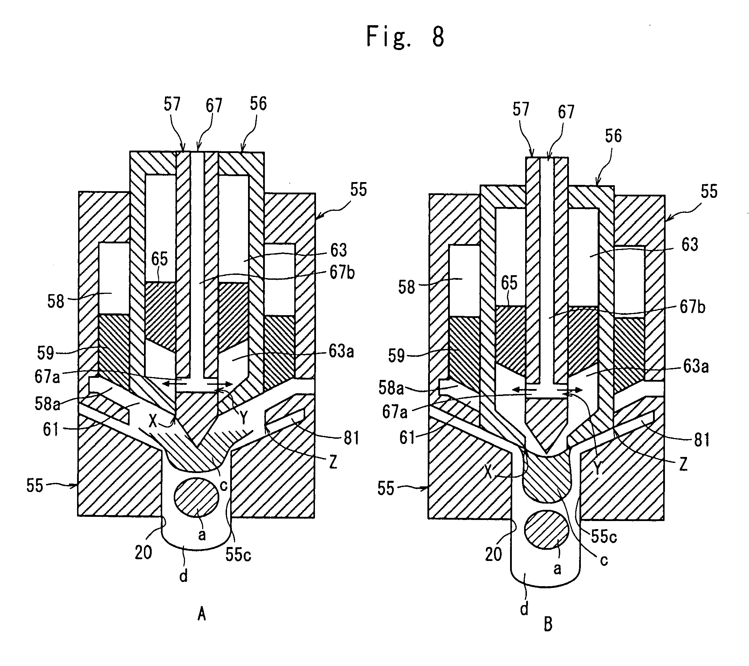

Next, as shown in Fig. 7C, the inner moving block 56 is arranged at the ascended position nearly simultaneously with the annular plunger 65 on the core layer side and at the same speed to close the first opening/closing valve X, to interrupt the flow of the core layer molten resin through the core layer flow passage 67, and to open the third opening/closing valve Z so that the main layer flow passage 61 is communicated with the nozzle 55c.
Next, as shown in Fig. 8A, the core layer measuring portion 63a starts measuring the core layer molten resin. That is, in the transverse flow passage 67a of the core layer flow passage 67, the front end portion of the annular plunger 65 is arranged at a position where it faces the core layer flow passage 67. In this state, the first opening/closing valve X is closed and whereby a force acts on the annular plunger 65 on the core layer side to push it up due to the pressure-feeding force of the core layer molten resin.

The annular plunger 65 is operated by the servo motor 66 and is resisting against the pushing force of the core layer molten resin. Here, the servo motor 66 gradually lifts up the annular plunger 65 while it is receiving the pushing force up to a predetermined height in the core layer measuring chamber 63 as shown in Fig. 8A so that the core layer molten resin is contained in the core layer measuring portion 63a. Due to this action, the molten resin is contained in the core layer measuring portion 63a and fills the core layer measuring portion 63a without gap in a state of receiving a pressure, preferably, a predetermined pressure; i.e., the core layer molten resin is contained in the core layer measuring portion 63a so that it is filled with the core layer molten resin of a predetermined amount (measured).
In the main layer measuring chamber 58, on the other hand, the annular plunger 59 on the main layer side is lowered by the control device to eject the molten resin in the main layer measuring portion 58a, and the molten resin c is ejected by cleaning shot to the front end portion of the lift valve 57 to flow away the core layer molten resin adhered to the end of the lift valve 53 with the main layer resin. The main layer molten resin c is extruded into the inside of the outer main layer molten resin d following the core layer molten resin a.

Next, as shown in Fig. 8B, the inner moving block 56 is moved to a descended position to open the first opening/closing valve X and to close the third opening/closing valve Z. Thus, the die head 7 assumes the initial state shown in Fig. 6 and Fig. 7A to complete a cycle of the step of extruding the molten resin.
The composite molten resin 8 including the core layer extruded from the ejection port 20 of the die head 7 is separated away from the ejection port 20 like in the above first embodiment, and is conveyed into the metal mold (female mold) 30 of the compression-forming device 4; i.e., the multi-layer drop 8 is fed into the metal mold 30 in which a preform is compression-formed. This embodiment, too, is capable of forming a composite molten resin like the above first embodiment. It is, further, possible to pressure-feed the main layer molten resin (molten resin of a different kind) different from the outer main layer molten resin and the core layer molten resin from the main layer molten resin feed means 69 (means 69 for feeding the molten resin of a different kind) to thereby form a three-kind-three-layer composite molten resin in which the molten resin of the different kind is arranged on the core layer of the form of a dumpling.
Like the first embodiment, the second embodiment, too, is provided with a cutter for cutting the composite molten resin, and the cutting period is brought into agreement or synchronism with the operation period of the annular plungers 59, 65 and the inner moving block 56 in order to successively obtain multi-layer drops in a constant amount and in a state where the core layer resin is arranged nearly at a predetermined position, which is desirable.

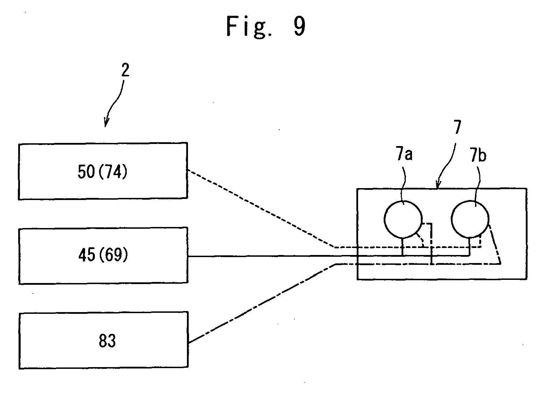

Though the embodiments of the invention were described above, the invention can be variously modified or altered without departing from the technical spirit of the invention, as a matter of course.
For example, the above first embodiment forms the two-kind-three-layer composite molten resin and the second embodiment forms the two-kind-three-layer or three-kind-three-layer composite molten resin. However, it is also possible to form many other many-kind-many-layer composite molten resin. For instance, the kinds and number of the layers can be increased by, further, providing a new measuring chamber, a plunger, an opening/closing valve and a flow passage on the inside (center side) of the core layer molten resin measuring chamber, or by, further, arranging another resin flow passage on the outer circumference of the main layer flow passage and the outer main layer resin flow passage. In the above embodiments, further, at the time of measuring the molten resins, loads were applied by the servo motors 36, 42, 60 and 66 to the annular plungers 35, 41, 59 and 65 to take measurements. However, it is also allowable to combine the servo motors with a known mechanism, or to use the above devices/mechanisms that move up and down instead of using the servo motors. It is, further, allowable to omit the servo motors but to control the molten resin ejection pressures of the extruders and gear pumps of the molten resin feed means in order to measure the molten resins relying only upon the loads of the molten resin pushing forces in compliance with the lift up (moving back) of the plungers.
The gear pump in the molten resin feed means may be omitted when the molten resin is measured by exerting a load by controlling the annular plunger that moves up and down.
The compression-forming machine that uses the multi-layer drops is not limited to the rotary type (Carousel) compression-forming machine only of this embodiment but may be a drop-fed compression-forming machine or a batchwise many-drop-fed compression-forming machine. Further, the multi-layer drops are not limited to be for being compression-formed but may also be used, for example, as pellets. Moreover, the composite molten resin may be cut into multi-layer drops containing the core layer by halves or may be cut into an elongated form containing a plurality of core layers instead of being cut into drops each containing a dumpling-like core layer. To obtain the multi-layer drops containing the core layer by halves, the cutting period of the cutter may be set to be twice as long as the operation period of the plungers and the valve mechanisms. To obtain the multi-layer drops in an elongated form containing a plurality of core layers, the operation period of the plungers and the valve mechanisms may be set to be an integer of times (an integer of 2 or larger) of the cutting period of the cutter. Further, the position of the core layer may be deviated to be higher or lower than the center of the drops by adjusting the operation timing of the plungers and the valve mechanisms and the cutting timing of the cutter. Or, the core layer may be divided to be arranged to the upper end and the lower end of the multi-layer drop so that the main layer only is arranged in the center.
Though not particularly referred to, the extrusion-forming machine 2 may be provided with a plurality of die heads 7 as shown in Fig. 9. This embodiment uses the die head 7 of the form based on the above second embodiment, the die head 7 having two die head portions 7a and 7b which are connected to the main layer molten resin feed means 45 (or 69), core layer molten resin feed means 50 (or 74) and outer main layer molten resin feed means 83 through flow passages. The flow passage of the main layer molten resin feed means 45 is represented by a solid line, the flow passage of the core layer molten resin feed means 50 is represented by a dotted line and the flow passage of the outer main layer molten resin feed means 83 is represented by a dot-dash chain line. In the case of the die head 7 of the form of the first embodiment, the outer main layer molten resin feed means 83 may be suitably omitted or its operation may be stopped.
When three or more die heads are used, they may be suitably arranged, e.g., linearly, like a lattice, annularly or radially.
When the plurality of die heads 7 are provided as described above, the force for pressure-feeding the molten resin from the upstream of the flow passage may be suitably controlled by the molten resin feed means or the mechanisms/devices (e.g., servo motors) for moving the plungers up and down may be suitably controlled so that a desired composite molten resin is nearly uniformly ejected from the die heads 7.

## Claims

1. A die head for forming a multi-layer resin comprising at least a main layer-forming flow passage for flowing a molten resin into a nozzle of the die head of an extrusion-forming machine passing through the die head, and a core layer-forming flow passage for intermittently flowing a molten resin into the nozzle of the die head passing through the die head, so that the surrounding of a core layer flowing out from said core layer-forming flow passage is covered with a main layer flowing out from the main layer-forming flow passage; wherein
at least either said main layer-forming flow passage or said core layer-forming flow passage is provided with a measuring chamber into which the molten resin is pressure-introduced from the upstream side of said flow passage due to the pressure-feeding force of the molten resin, and said measuring chamber is provided with a plunger which measures the molten resin while moving back receiving said pressure-feeding force of the molten resin and moves forth so as to eject the measured molten resin to the downstream side of said flow passage; and
at least the amount of ejecting the molten resin measured by said plunger and the timing for starting the ejection are controlled by a control unit that controls the back-and-forth motion of said plunger.

2. The die head for forming a multi-layer resin according to claim 1, wherein said plunger is driven by a servo motor, said servo motor is controlled by said control unit at a moment when the molten resin is pressure-fed into said measuring chamber, said plunger moves back in a state where said plunger is receiving a backward-moving pressure of the molten resin that is pressure-introduced into said measuring chamber, and a position to where said plunger moves back is limited.

3. The die head for forming a multi-layer resin according to claim 1, wherein said measuring chamber and said plunger are incorporated in said die head.

4. The die head for forming a multi-layer resin according to claim 1, wherein one or more molten resin flow passages are provided on the outer side of said core layer-forming flow passage, and at least any one of said flow passages, said main layer-forming flow passage or said core layer-forming flow passage is provided with said measuring chamber and the plunger.

5. The die head for forming a multi-layer resin according to claim 1, wherein said die head for forming the multi-layer resin is provided with an inner moving block, and said inner moving block works both as an opening/closing valve of said main layer-forming flow passage and as the core layer measuring chamber.

6. The die head for forming a multi-layer resin according to claim 5, wherein said inner moving block, further, works as an opening/closing valve of the core layer-forming flow passage, and switches the opening and closing of said main layer flow passage and the core layer flow passage.

7. The die head for forming a multi-layer resin according to claim 1, wherein said plunger works as a flow passage opening/closing valve to the measuring chamber in said main layer flow passage and/or the core layer flow passage.

8. The extrusion-forming machine according to claim 1 equipped with a plurality of said die heads for forming the multi-layer resin that have said measuring chamber and the plunger.

9. A multi-layer drop-forming machine wherein said die head for forming the multi-layer resin having said measuring chamber and the plunger of claim 1 is additionally equipped with a cutter which periodically cuts the multi-layer resin ejected from said die head for forming the multi-layer resin into a multi-layer drop, said plunger is periodically moved back and forth, and the period for moving said plunger back and forth is brought into agreement with the period for cutting the multi-layer resin by said cutter.

10. The multi-layer drop-forming machine according to claim 9, wherein the operation of said plunger is brought into synchronism with the operation of said cutter.
